# EUROPEAN PATENT APPLICATION

(11) **EP 4 718 197 A1**
(43) Date of publication of application: **01.04.2026**
(21) Application number: 25204180.1
(22) Date of filing: 24.09.2025
(51) Int. Cl.: G05D 1/686, G05D 107/60, G05D 109/10, G05D 111/10, G05D 1/2285, G05D 1/243, G05D 1/622

(54) **SYSTEM AND METHOD FOR CONTROLLING MOBILE BODY, MOBILE BODY, AND PROGRAM**

(30) Priority: 30.09.2024 JP 2024171484
(71) Applicant: HONDA MOTOR CO., LTD., Tokyo 105-8404 (JP)
(72) Inventor: IMAIZUMI, Akane, Saitama, 3510193 (JP); MATSUZAKI, Sango, Saitama, 3510193 (JP)
(74) Representative: Kiwit, Benedikt

(57) **Abstract**

A system configured to control a mobile body to move in accordance with movement of a person is provided. The system acquires information indicating a position and a moving direction of a person. The system acquires a graph that includes nodes and edges and indicates a movement route of the person. The system determines a first edge of the graph corresponding to the position of the person based on the position of the person. The system decides a movement target position of the mobile body based on the first edge or on one or more edges located in the moving direction of the person with respect to the first edge.

## Description

### TECHNICAL FIELD

The present invention relates to a system and a method for controlling a mobile body, a mobile body, and a program, particularly a mobile body that moves in accordance with movement of a person.

### BACKGROUND

Autonomous mobile robots have been actively developed. For example, Japanese Patent Laid-Open No. 2021-77088 discloses an autonomous mobile robot that moves while tracking an object to be tracked such as a moving person. Japanese Patent Laid-Open No. 2021-77088 attempts to achieve more natural tracking by setting a tracking target on the side or the rear of a current position of the object to be tracked.

### SUMMARY

According to an embodiment, a system (201) configured to control a mobile body (100) to move in accordance with movement of a person comprises: an information acquisition means (221) for acquiring information indicating a position and a moving direction of a person; a graph acquisition means (222) for acquiring a graph that includes nodes and edges and indicates a movement route of the person; a determination means (223) for determining a first edge of the graph corresponding to the position (U) of the person based on the position of the person; and a decision means (226) for deciding a movement target position (T) of the mobile body (100) based on the first edge or on one or more edges located in the moving direction of the person with respect to the first edge.

According to another embodiment, a mobile body (100) comprises: a system (201) according to an embodiment; a sensor (206); a control means (227) for controlling a movement of the mobile body (100) to move toward the movement target position (T); and a drive means (204) for moving the mobile body (100) in accordance with the control by the control means (227), wherein the information acquisition means (221) included in the system (201) is further for estimating the position of the person based on an output from the sensor (206).

According to still another embodiment, a method of controlling a mobile body (100) to move in accordance with movement of a person comprises: acquiring (S301) information indicating a position and a moving direction of a person; acquiring (S302) a graph that includes nodes and edges and indicates a movement route of the person; determining (S303) a first edge of the graph corresponding to the position of the person based on the position of the person; and deciding (S305) a movement target position of the mobile body based on the first edge or on one or more edges located in the moving direction of the person with respect to the first edge.

According to yet another embodiment, a computer program comprises instructions which, when the program is executed by a computer, cause the computer to carry out a method according to an embodiment.

Further features of the present invention will become apparent from the following description of exemplary embodiments with reference to the attached drawings.

### BRIEF DESCRIPTION OF THE DRAWINGS

FIG. 1 is a view illustrating an appearance of a mobile body according to an embodiment;
FIG. 2 is a diagram illustrating a functional configuration example of the mobile body according to the embodiment;
FIG. 3 is a flowchart of a processing method according to the embodiment;
FIG. 4 is a view illustrating a method for creating a graph;
FIG. 5 is a view illustrating a method for predicting a movement destination of a user;
FIG. 6 is a view illustrating a method for deciding a movement target position;
FIGS. 7A to 7C are views illustrating the method for deciding the movement target position;
FIGS. 8A and 8B are views illustrating the method for deciding the movement target position;
FIGS. 9A and 9B are views illustrating the method for deciding the movement target position; and
FIGS. 10A to 10C are views illustrating a method for updating the graph.

### DESCRIPTION OF THE EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

A movement of a mobile body may become unstable based on a movement of an object to be tracked even in a method for controlling the mobile body so as to move toward a tracking target set on the side or the rear of a current position of the object to be tracked as in Japanese Patent Laid-Open No. 2021-77088. In addition, in the method in Japanese Patent Laid-Open No. 2021-77088, it is difficult to move the mobile body in accordance with movement of a person (for example, to cause the mobile body to move ahead of the person) by a method other than tracking.

An embodiment of the present invention can stably control a movement of a mobile body that moves based on a movement of an object to be tracked.

### <Configuration of Mobile Body>

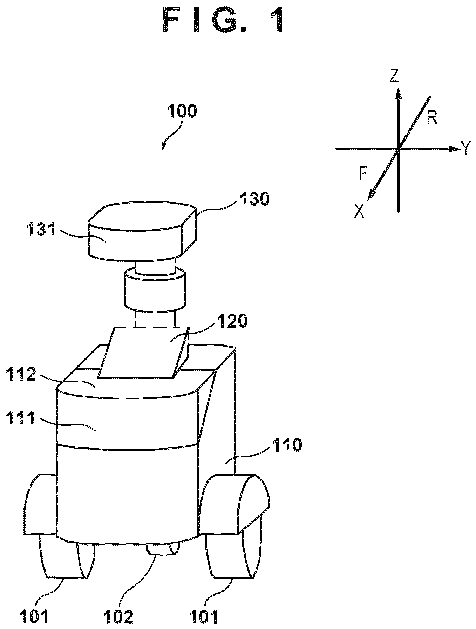

An external configuration example of a mobile body 100 according to the embodiment will be described with reference to FIG. 1. An arrow X in FIG. 1 indicates a front-and-rear direction of the mobile body 100. The front is denoted by F, and the rear is denoted by R. Arrows Y and Z respectively indicate a width direction (horizontal direction) and a vertical direction of the mobile body 100. The mobile body 100 can autonomously move. For example, the mobile body 100 is equipped with a battery and moves mainly by power of a motor. The mobile body 100 may be used in a site such as an amusement facility, a large commercial facility, an airport, a park, a sidewalk, or a parking lot. The mobile body 100 may be a vehicle that moves on the ground using wheels, an aircraft (for example, a drone) that moves in the air, or a robot that moves on the ground using two or more legs. The movement using wheels is also called traveling. The movement in the air is also called flying. The movement using two or more legs is also referred to as walking. Hereinafter, a case where the mobile body 100 is a vehicle will be described, but the same description applies to other forms of mobile bodies.

The mobile body 100 is movable in accordance with movement of a person (for example, a user of the mobile body 100, and hereinafter simply referred to as the user). For example, the mobile body 100 is movable so as to accompany the user. Accompanying the user means that the mobile body 100 moves based on the movement led by the user. For example, the mobile body 100 can move such that the mobile body 100 moves ahead of the user, moves alongside the user, or follows the user. In the following example, a configuration in which a person does not get on the mobile body 100 will be described, but a person different from the user may get on the mobile body 100.

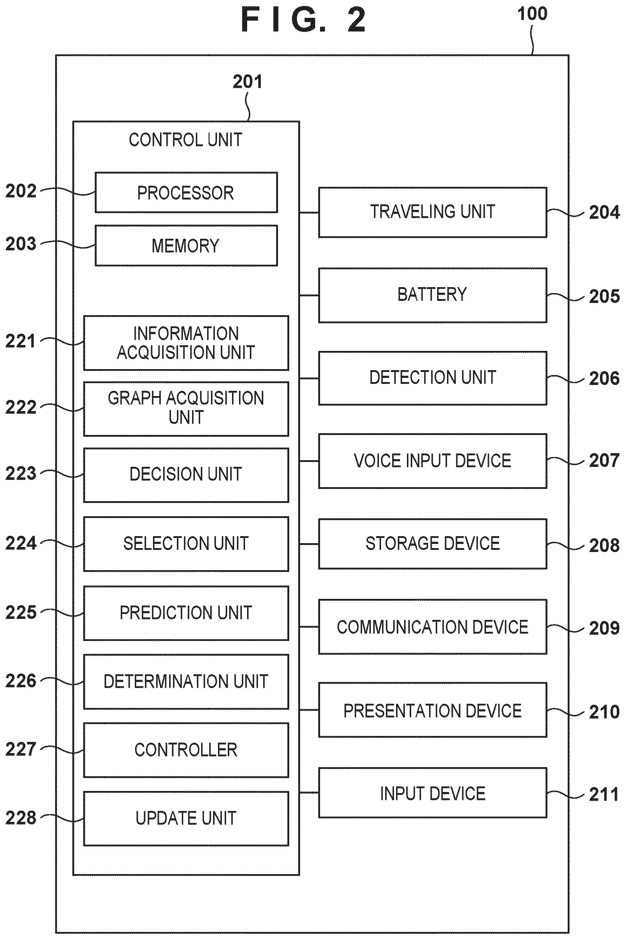

The mobile body 100 includes, for example, a pair of left and right front wheels 101 and a rear wheel 102 included in a traveling unit 204 (FIG. 2). The traveling unit 204 may be in another form such as a four-wheeled vehicle or a two-wheeled vehicle. The mobile body 100 may be autonomously movable to a preset destination instead of or in addition to accompanying the user.

The mobile body 100 includes a housing 110 capable of storing a load. A lid openable and closable for storing the load is provided on a front surface 111 of the housing. This lid can have a lock mechanism. The lock mechanism is controlled by the mobile body 100. For example, the mobile body 100 unlocks the lid in a case where authentication of the user is successful. Alternatively, the mobile body 100 may be capable of storing the load in another manner.

A touch screen 120 is disposed on an upper surface 112 of the housing. For example, the user can change the settings of the mobile body 100 or confirm information related to a facility via the touch screen 120. A detection unit 206 (FIG. 2) is stored in a sensor box 130. The detection unit 206 includes a sensor such as a camera. The detection unit 206 recognizes the user and other targets included in the surrounding environment of the mobile body 100 through a front surface 131, a side surface, and a back surface of the sensor box 130.

### <Functional Configuration Example of MobileBody>

A functional configuration example of the mobile body 100 will be described with reference to FIG. 2. The mobile body 100 includes components illustrated in FIG. 2. The mobile body 100 may include a component not illustrated in FIG. 2 or may not include some of the components illustrated in FIG. 2.

The mobile body 100 is an electric autonomous mobile body including the traveling unit 204 and using a battery 205 as a main power supply. The battery 205 is, for example, a secondary battery such as a lithium ion battery. The traveling unit 204 causes the mobile body 100 to self-travel using the electric power supplied from the battery 205.

The traveling unit 204 accelerates and decelerates the mobile body 100 by changing the rotational speed of the pair of front wheels 101 using the motor as a drive source. The traveling unit 204 may include a braking mechanism for decelerating the mobile body 100. The traveling unit 204 steers the mobile body 100 by making the rotational speed different between the pair of front wheels 101. The traveling unit 204 can detect and output physical quantities representing motions of the mobile body 100, such as the traveling speed, acceleration, and steering angle of the mobile body 100, and angular velocity, angular acceleration, and the like of the housing 110 of the mobile body 100.

The mobile body 100 includes the detection unit 206 including one or more sensors. The detection unit 206 generates data for recognizing targets (including an object and a person included in the surrounding environment of the mobile body 100) included in the surrounding environment of the mobile body 100. The detection unit 206 includes sensors such as an imaging device (camera), a radar device, light detection and ranging (LiDAR), and an ultrasonic sensor whose detection range is the periphery of the mobile body 100, and outputs sensor information. The imaging device may have a configuration using a fish-eye lens, or may have a configuration capable of stereo imaging. The detection unit 206 further includes a global navigation satellite system (GNSS) sensor to receive a GNSS signal and detect a current position of the mobile body 100. The detection unit 206 may detect the current position using a signal of a wireless local area network (LAN) or Bluetooth. The imaging device may be an RGB camera or may further have a depth measurement function. For example, the mobile body 100 may include an RGB camera with a depth measurement function on each of the front side and the back side of the sensor box 130, and may have an RGB cameras without a depth measurement function on each of the right side and the left side of the sensor box 130.

The mobile body 100 includes a control unit (electronic control unit (ECU)) 201. The control unit 201 functions as a control device of the mobile body 100. The control unit 201 includes one or more processors 202 represented by a central processing unit (CPU) and a memory 203 which is a storage device such as a semiconductor memory. Therefore, the control unit 201 may also be referred to as an information processing device or a computer. The memory 203 stores a program to be executed by the processor 202, data used for processing in the processor 202, and the like. A plurality of sets of the processor 202 and the memory 203 may be provided for each function of the mobile body 100 so as to be able to communicate with each other.

The control unit 201 acquires the physical quantity representing the motion, output from the traveling unit 204, a detection result of the detection unit 206, input information of the touch screen 120, voice information input from a voice input device 207, and the like, and executes corresponding processing. For example, the control unit 201 performs control of the motor of the traveling unit 204, display control of the touch screen 120, notification to the surrounding environment by voice, and the like.

The voice input device 207 collects voice of the surrounding environment of the mobile body 100. The control unit 201 can recognize the input voice and execute processing corresponding to the recognized input voice. A storage device 208 is a nonvolatile mass storage device that stores map information and the like including information of a traveling road on which the mobile body 100 can travel, a region where entry is limited, a landmark, a store, and the like. The storage device 208 may also store the program to be executed by the processor 202, the data to be used for processing in the processor 202, and the like. A communication device 209 is, for example, a communication device that can be connected to an external network via wireless communication such as 5th generation mobile communication or wireless LAN.

A presentation device 210 displays (presents) a user interface screen for the user on the touch screen 120, and outputs (presents) a speech to the surrounding environment of the mobile body 100 via a microphone. An input device 211 includes, for example, a touch panel, and may be configured integrally with the touch screen 120. The input device 211 receives an operation input from the user via the touch panel.

The control unit 201 corresponds to a system or an information processing device that predicts movement of a person, or a system or an information processing device that controls a mobile body so as to move in accordance with movement of a person according to the embodiment. The processor 202 of the control unit 201 executes the program stored in the memory 203 or the storage device 208 to implement functions of an information acquisition unit 221, a graph acquisition unit 222, a determination unit 223, a selection unit 224, a prediction unit 225, a decision unit 226, a controller 227, and an update unit 228. Meanwhile, at least some of these functions may be implemented by an information processing device different from the mobile body 100. That is, an information processing device such as a computer including a processor and a memory can execute the program stored in the memory, thereby performing processing of each unit based on information transmitted from the mobile body 100 as necessary. In addition, such an information processing device may remotely control the mobile body 100 based on a processing result. Further, at least some of these functions may be implemented by a cloud service. The system that predicts the movement of the person or the system that controls the mobile body so as to move in accordance with the movement of the person according to the embodiment may be such an information processing device or a cloud system.

The information acquisition unit 221 acquires information indicating a position and a moving direction of the user. The information acquisition unit 221 can acquire information indicating the position and the moving direction of the user. For example, the information acquisition unit 221 may acquire information indicating a current geographical position of the user. In addition, the information acquisition unit 221 can determine the moving direction of the user based on a change in the current geographical position of the user. In another embodiment, the information acquisition unit 221 may acquire information indicating a current posture of the user. The information acquisition unit 221 can determine the moving direction of the user based on the current posture of the user. The information acquisition unit 221 can estimate the position of the person based on the output from the sensor. For example, the information acquisition unit 221 can acquire these pieces of information based on a detection result (for example, an image captured by the imaging device) of the detection unit 206.

The graph acquisition unit 222 acquires a graph indicating a movement route of the user. The graph includes nodes and edges. An edge indicates a movement route of a person. A node connects two edges. Note that the graph may follow the world coordinate system. In addition, the graph may follow another coordinate system such as a coordinate system based on the mobile body 100 as a reference. In any case, the node of the graph is associated with a position in the real space. In addition, the edge of the graph is associated with a route in the real space, and a point on the edge is associated with a position on the route. Note that the edge may be straight or curved.

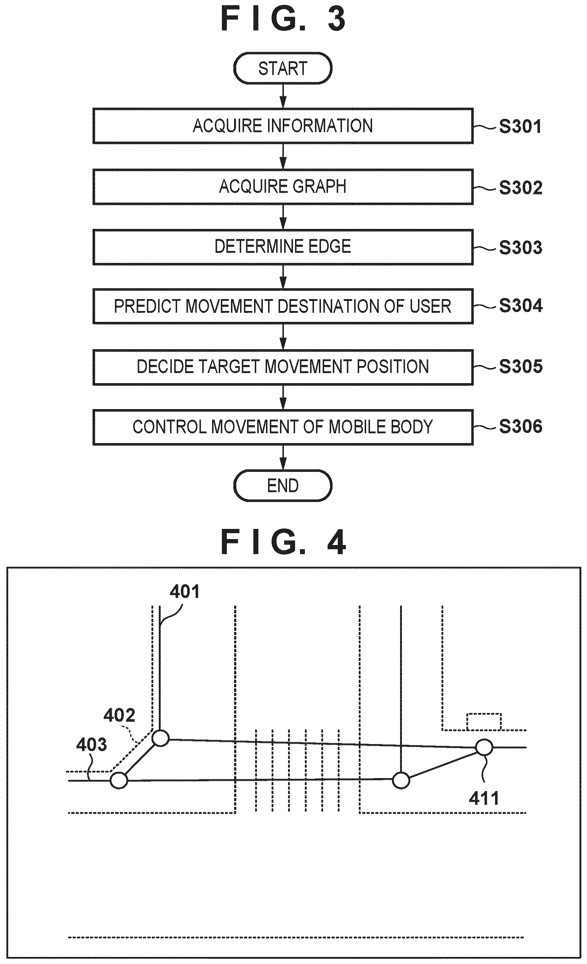

FIG. 4 illustrates an example of the graph. In FIG. 4, nodes are represented by circles, edges are represented by solid lines, and structures such as buildings and roads are represented by broken lines. In the embodiment, the graph is created based on environmental features such as a road, a building, and an obstacle. For example, the edge can be set along the outer edge of a movable region of a person. The edge can also be set along the outer edge of a static obstacle that does not move. In FIG. 4, edges 401 to 403 are set along the outer edge of a building.

The node may be set at a position where two or more roads intersect. In addition, the node may be set at a position where a person passes frequently. For example, the node may be set at an entrance of a building or at the uppermost or lowermost position of a staircase. In addition, the node may be set at a position where a person stops frequently. For example, the node may be set at a position of a vending machine. In FIG. 4, a node 411 is set at an entrance of a building.

A method for creating the graph is not particularly limited. For example, the user may manually create the graph based on the environmental feature. In addition, the information processing device may automatically create the graph based on the environmental feature. Meanwhile, the graph may be created based on movement data of a pedestrian. For example, data indicating movement trajectories of a plurality of pedestrians can be extracted based on a moving image or the like. The user may manually create the graph while referring to the movement trajectories of the plurality of pedestrians. The information processing device may also automatically create the graph based on the movement trajectories of the plurality of pedestrians.

The storage device 208 can store data of such a graph. In this case, the graph acquisition unit 222 can acquire the graph from the storage device 208. Meanwhile, the graph acquisition unit 222 may acquire the graph from an external information processing device via the communication device 209.

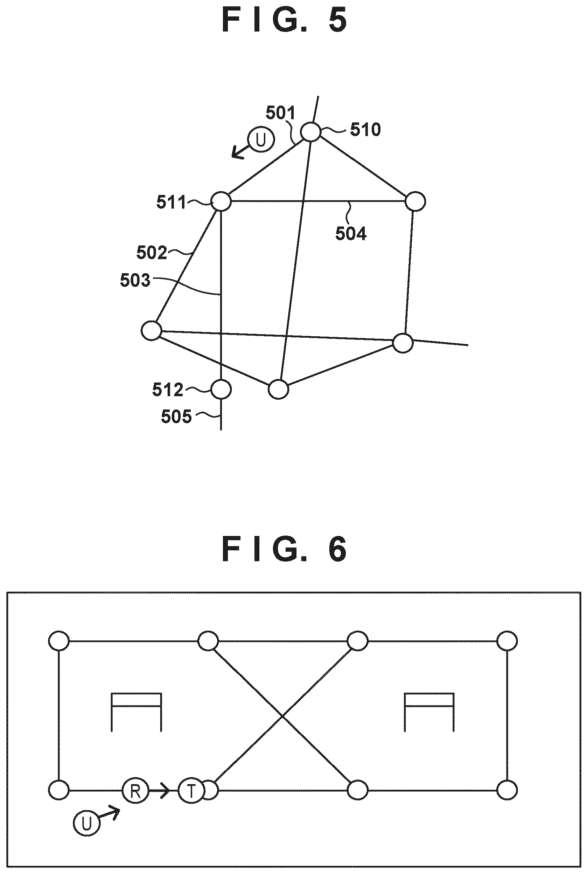

The determination unit 223 determines a first edge of the graph corresponding to a position of the user based on the position of the user. For example, the determination unit 223 may determine an edge closest to a current geographical position of the user as the first edge. In an example of FIG. 5, the edge closest to the current position of the user represented by U is an edge 501. Therefore, the determination unit 223 can determine the edge 501 as the first edge. For example, the determination unit 223 can determine the first edge based on the position of the user according to the world coordinate system and the graph according to the world coordinate system.

Note that the determination unit 223 may determine the first edge based on the moving direction of the user. Further, the determination unit 223 may determine the first edge from among a plurality of edges based on both a distance between the position of the user and each of the plurality of edges constituting the graph and the similarity between a direction of each of the plurality of edges and the moving direction of the user. For example, the determination unit 223 can set a first score to each of the edges based on the distance between the position of the user and the edge. In addition, the determination unit 223 can set a second score for each of the edges based on the similarity between the moving direction of the user and the direction of the edge. Then, the determination unit 223 can select the first edge based on the first score and the second score. For example, the first edge selected by the determination unit 223 may be an edge having the highest total score. The total score can be calculated based on the first score and the second score.

The prediction unit 225 can predict a position corresponding to a point on the first edge as a movement destination of the user. In the example of FIG. 5, the prediction unit 225 can predict a position corresponding to a point on the edge 501 that is the first edge as the movement destination of the user. Here, the prediction unit 225 can predict a position corresponding to a point advanced in a moving direction of the user along the edge 501 from a point corresponding to the position of the user on the edge 501 as the movement destination of the user. The point corresponding to the position of the user on the first edge may be a point closest to the position of the user on the first edge. In addition, the prediction unit 225 can determine the moving direction of the user along the first edge in accordance with the moving direction of the user indicated by the information acquired by the information acquisition unit 221. The prediction unit 225 can determine the moving direction of the user along the first edge such that the inner product of a vector of the moving direction of the user along the first edge at the point corresponding to the position of the user on the first edge and a vector of the moving direction of the user indicated by the information acquired by the information acquisition unit 221 becomes positive. In the example of FIG. 5, the user (U) moves in the lower left direction as indicated by an arrow. In this case, the prediction unit 225 can determine that the moving direction of the user along the edge 501 is a direction from a node 510 to a node 511.

In addition, the prediction unit 225 can predict a position corresponding to a point on one or more edges located in the moving direction of the user with respect to the first edge as the movement destination of the user. The edge located in the moving direction of the user with respect to the first edge may include a second edge that is connected to the first edge via a first node, which is one of the two nodes to which the first edge is connected and is positioned ahead in the moving direction of the user along the first edge. In addition, an edge located in the moving direction of the user with respect to the first edge may include one or more additional edges that are consecutive to the second edge via one or more nodes. For example, it is assumed that the first edge is an edge 503 and the user is moving in a direction from a node 511 to a node 512. In this case, the selection unit 224 can select the node 512 located in the moving direction of the user out of the nodes to which the edge 503, which is the first edge, is connected as the first node. In addition, the selection unit 224 can select, as the second edge, an edge 505 connected to the edge 503 at the node 512 that is the first node. In this case, the prediction unit 225 can predict a position corresponding to a point on the edge 505 that is the second edge as the movement destination of the user.

Meanwhile, in the example of FIG. 5, the selection unit 224 can select, as the first node, the node 511 located in the moving direction of the user out of the nodes to which the edge 501, which is the first edge, is connected. Here, a plurality of edges, that is, an edge 502, the edge 503, and an edge 504 are connected to the node 511 that is the first node. In this case, the selection unit 224 can select the second edge from among the plurality of edges based on an orientation of each of the plurality of edges and an orientation of the first edge or the moving direction of the user. The selection unit 224 can select an edge extending in a direction closer to the orientation of the first edge or the moving direction of the user as the second edge. In the example of FIG. 5, the selection unit 224 can select the edge 502 as the second edge. In this case, the prediction unit 225 can predict a position corresponding to a point on the edge 505 that is the second edge as the movement destination of the user. Note that the orientation of the edge may be an orientation of the edge at a connection position to the node 511.

As a specific example, the selection unit 224 can select the second edge from among a plurality of edges based on an angle between the first edge and each of the plurality of edges. Here, the angle between the first edge and the selected second edge may be the largest angle among the angles between the first edge and the plurality of edges.

Note that the selection unit 224 may select the second edge further based on the distance between the position of the user and each edge. For example, the selection unit 224 can set a third score to each of a plurality of edges connected to the first edge at the first node based on the similarity between an orientation of the edge and the orientation of the first edge or the moving direction of the user. The third score may be set to a higher score as the similarity is higher. In addition, the selection unit 224 can set a fourth score to each of the plurality of edges based on a distance between the edge and the position of the user. The fourth score may be set to a higher score as the distance is shorter. Then, the selection unit 224 can select the second edge based on the third score and the fourth score. For example, the second edge selected by the selection unit 224 may be an edge having the highest total score. The total score can be calculated based on the third score and the fourth score.

The prediction unit 225 can predict, as the movement destination of the user, a position corresponding to a point separated by a predetermined distance along one or more edges located in the moving direction of the user from a point closest to the current position of the user on the first edge. The predetermined distance may be a fixed value. In addition, the predetermined distance may be a distance according to the moving speed of the user.

The decision unit 226 decides a movement target position of the mobile body 100. The movement target position is a target position of the movement destination of the mobile body 100. Hereinafter, an operation in which the decision unit 226 decides the movement target position such that the mobile body 100 moves ahead of the user will be described.

In the embodiment, the decision unit 226 can decide the movement target position based on the movement destination of the user predicted by the prediction unit 225. FIG. 6 illustrates an example of a method for deciding the movement target position. FIG. 6 illustrates the current position (U) and the moving direction (arrow) of the user. FIG. 6 also illustrates a current position (R) of the mobile body 100. FIG. 6 further illustrates the movement target position (T) and a moving direction (arrow) of the mobile body 100 from the current position (R).

In the present embodiment, the decision unit 226 decides the movement target position such that the mobile body 100 moves ahead of the user, whereby a movement of the mobile body 100 is controlled. In the embodiment, the decision unit 226 sets the movement target position (T) of the mobile body 100 on the front side of the movement destination of the user. The decision unit 226 may set the movement target position (T) of the mobile body 100 based on the predicted movement destination of the user. For example, the movement target position (T) may be a position away from the predicted movement destination of the user along the edge. In addition, the movement target position (T) may be a position offset from the predicted movement destination of the user by another method. For example, the decision unit 226 may set the movement target position (T) such that the mobile body 100 moves diagonally forward of the user. In this case, the movement target position of the mobile body is decided based on a position corresponding to points on one or more edges located in the moving direction of the user (that is, the predicted movement destination of the user). For example, the decision unit 226 can set the movement target position (T) such that the mobile body 100 moves to a position on the front side of the movement destination of the user after a lapse of a predetermined time, predicted by the prediction unit 225, the predetermined time later.

Meanwhile, in another embodiment, the decision unit 226 may decide the movement target position such that the mobile body 100 follows the user. In this case, the decision unit 226 can set the movement target position (T) of the mobile body 100 behind the movement destination of the user.

In addition, it is not essential to use the predicted movement destination of the user in order to decide the movement target position of the mobile body 100. The decision unit 226 can decide the movement target position of the mobile body 100 based on one or more edges including the first edge determined by the determination unit 223 and located in the moving direction of the user. For example, the decision unit 226 can decide the movement target position of the mobile body 100 based on a position corresponding to a point on one or more edges located in the moving direction of the user. In the example of FIG. 5, the decision unit 226 can set the movement target position of the mobile body 100 at a position corresponding to the point on the edge 501 that is the first edge or the edge 502 that is the second edge. The movement target position of the mobile body 100 may be a position corresponding to a point separated by a predetermined distance along one or more edges located in the moving direction of the user from a point closest to the current position of the user on the first edge. The predetermined distance can be, for example, a distance according to the moving speed of the user. In addition, the decision unit 226 may set the movement target position of the mobile body 100 at a position offset from the position corresponding to the point on the edge 501 or the edge 502. According to such a configuration, the mobile body 100 can move ahead of the user.

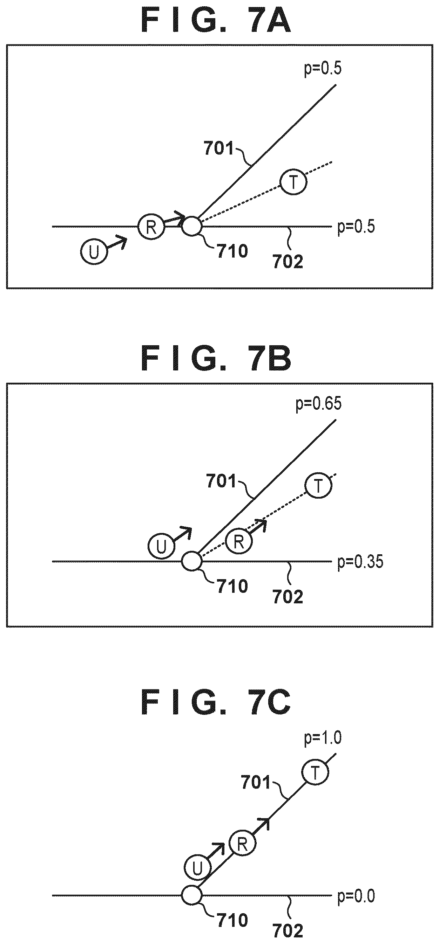

Meanwhile, in an example of FIG. 7A, a plurality of edges, that is, an edge 701 and an edge 702 are connected to a node 710 that is the first node located in the moving direction of the user among nodes to which the first edge corresponding to the position (U) of the user is connected. In this situation, the user may move in either a direction of the edge 701 or a direction of the edge 702. Therefore, the decision unit 226 can decide the movement target position of the mobile body 100 based on the plurality of edges (for example, the edge 701 and the edge 702) connected to the node 710 that is the first node.

For example, the decision unit 226 can evaluate each of the plurality of edges connected to the first edge. The decision unit 226 can evaluate each of the edges based on the relationship between the moving direction of the user and an orientation of the edge. For example, the decision unit 226 can evaluate an edge more highly as the moving direction of the user and an orientation of the edge are closer. In addition, the decision unit 226 may evaluate each of the edges based on a distance between the current position of the user and the edge. An evaluation of the edge may indicate a probability that the user will pass through a route corresponding to the edge. In the example of FIG. 7A, the decision unit 226 evaluates probabilities that the user passes through routes corresponding to the edge 701 and the edge 702 as 0.5. In addition, the decision unit 226 can decide a position on a route obtained by weighting and combining routes corresponding to the plurality of edges in accordance with the evaluations of the respective edges as the movement target position of the mobile body. In FIG. 7A, a route obtained by weighting and combining the routes corresponding to the edge 701 and the edge 702 in accordance with the evaluations (both 0.5) is indicated by a broken line. Then, the decision unit 226 sets the movement target position (T) on the broken line.

FIG. 7B illustrates the position (U) of the user, the position (R) of the mobile body 100, and the movement target position (T) at a time later than that of FIG. 7A. In the example of FIG. 7B, the decision unit 226 evaluates the probabilities that the user passes through the routes corresponding to the edge 701 and the edge 702 as 0.65 and 0.35, respectively. In addition, the decision unit 226 sets the movement target position (T) on a route (broken line) obtained by weighting and combining the routes corresponding to the edge 701 and the edge 702 in accordance with the evaluations.

FIG. 7C illustrates the position (U) of the user, the position (R) of the mobile body 100, and the movement target position (T) at a time later than that of FIG. 7B. In the example of FIG. 7C, the decision unit 226 evaluates the probabilities that the user passes through the routes corresponding to the edge 701 and the edge 702 as 1.0 and 0.0, respectively. Therefore, the decision unit 226 sets the movement target position (T) on the route corresponding to the edge 701.

The controller 227 controls a movement of the mobile body 100 so as to move toward the movement target position decided by the decision unit 226. For example, the controller 227 can generate a track from the current position of the mobile body 100 toward the movement target position. Note that the controller 227 can generate a track so as to avoid an obstacle. Then, the controller 227 moves the mobile body 100 along the track. Note that this track may or may not pass the movement target position depending on the current posture and speed of the mobile body 100. The traveling unit 204 can move the mobile body 100 in accordance with the control by the controller 227. For example, the controller 227 can supply a control signal to the traveling unit 204 to move the mobile body 100.

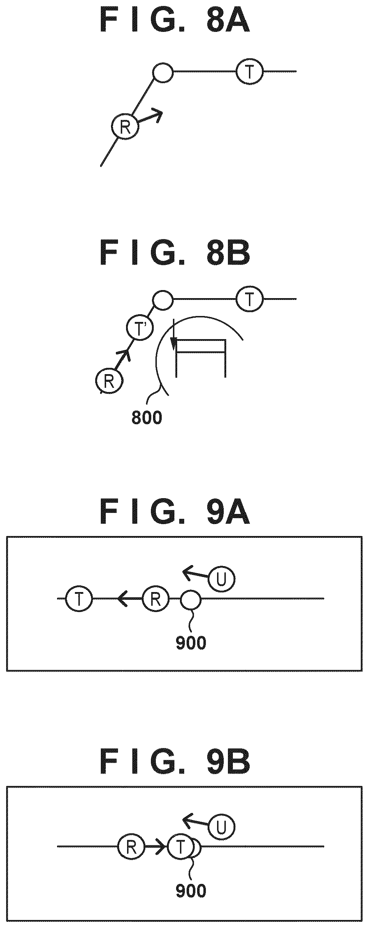

Here, the controller 227 can control the movement of the mobile body 100 such that the mobile body 100 moves straight toward the movement target position. In an example illustrated in FIG. 8A, the controller 227 controls the mobile body 100 such that the mobile body 100 moves straight from the current position (R) to the movement target position (T). Meanwhile, in an example illustrated in FIG. 8B, there is an obstacle region 800 between the current position (R) and the movement target position (T) of the mobile body 100. Therefore, the controller 227 can control the mobile body 100 such that the mobile body 100 moves on a route indicated by an edge in response to a determination that the obstacle is present between the current position of the mobile body 100 and the movement target position. In the example illustrated in FIG. 8B, the controller 227 sets a temporary movement target position (T') on the route indicated by the edge. Then, the controller 227 controls the movement of the mobile body 100 such that the mobile body 100 moves toward the temporary movement target position (T'). On the other hand, in response to a determination that there is no obstacle between the current position of the mobile body 100 and the movement target position, the controller 227 can control the mobile body 100 such that the mobile body 100 moves straight from the current position of the mobile body 100 to the movement target position. In this manner, when it is determined that there is no obstacle between the current position of the mobile body 100 and the movement target position while the mobile body 100 moves on the route indicated by the edge, the mobile body 100 can start moving straight to the movement target position.

### <Method for Controlling Mobile Body>

A method in which the control unit 201 controls the mobile body 100 will be described with reference to FIG. 3. As described above, the control unit 201 can control the mobile body 100 to accompany the user. Each step in the method of FIG. 3 may be executed by the processor 202 executing the program stored in the memory 203 or the storage device 208. Alternatively, at least some steps in the method of FIG. 3 may be executed by a dedicated integrated circuit such as an application specific integrated circuit (ASIC). The method of FIG. 3 may be started as the mobile body 100 receives an instruction to accompany the user from the user. The control unit 201 repeatedly (for example, in a cycle of 100 ms) executes processing of S301 to S306.

The method of FIG. 3 is executed for the user of the mobile body 100. The control unit 201 identifies the user at the start of the method of FIG. 3 and controls the mobile body 100 to accompany this user. The control unit 201 may identify a person located in front of the mobile body 100 or a person who has performed user registration in the past in an image captured by the detection unit 206 (for example, the imaging device) as the user. During the execution of the method of FIG. 3, the control unit 201 continuously determines whether the user can be detected. If the user cannot be detected for a predetermined time since the last detection of the user, the control unit 201 may determine that the user is lost and interrupt the method of FIG. 3. Thereafter, the control unit 201 may resume the method of FIG. 3 in response to detection of the user.

In S301 to S304, the control unit 201 predicts the movement destination of the user.

In S301, the information acquisition unit 221 acquires information to be used in subsequent processing. As described above, the information acquisition unit 221 can acquire information indicating the position and the moving direction of the user. In addition, the information acquisition unit 221 may acquire mobile body information and environment information. The information acquisition unit 221 may store at least a part of the acquired information in the memory 203 or the storage device 208 for use in the subsequent processing.

The mobile body information is information related to the mobile body 100. The mobile body information may include a current moving speed of the mobile body 100, a current geographical position of the mobile body 100, and a current angular velocity of the mobile body 100. The control unit 201 may acquire the mobile body information based on an output from the traveling unit 204 or a detection result (for example, GNSS positioning data and inertial sensor data) of the detection unit 206.

The environment information is information related to the surrounding environment of the mobile body 100. The environment information may include the number, types, positions, and sizes of targets included in the surrounding environment of the mobile body 100. The targets may include static targets and a dynamic targets. The static targets may include structures such as a wall, a guardrail, a pillar, and a step. The static target is a target that is directly or indirectly fixed to the ground and does not move. Among the static targets, a target that may obstruct the movement of the mobile body 100 may be referred to as a static obstacle. The dynamic targets may include a pedestrian, a bicycle rider, an autonomous mobile body, an animal, and the like. The dynamic target is a target movable with respect to the ground. Among the dynamic targets, a target that can obstruct the movement of the mobile body 100 may be referred to as a dynamic obstacle. The control unit 201 may acquire the environment information based on a detection result (for example, an image captured by the imaging device) of the detection unit 206.

In S302, the graph acquisition unit 222 acquires the graph as described above.

In S303, the determination unit 223 determines the first edge of the graph corresponding to the position of the user as described above. Note that a method for associating the position of the user with the graph will be described later.

In S304, the prediction unit 225 predicts the movement destination of the user as described above. At this time, the selection unit 224 may select the second edge as described above.

In S305 and S306, the control unit 201 performs movement control of the mobile body 100.

In S305, the decision unit 226 decides the movement target position of the mobile body 100 as described above.

In S306, the controller 227 controls the movement of the mobile body 100 so as to move toward the movement target position as described above.

Note that the control unit 201 can monitor a distance between the dynamic obstacle around the mobile body 100 and the mobile body 100 during the execution of the method of FIG. 3. Then, when the distance is within a threshold (for example, 1.5 m), the control unit 201 may perform an action (for example, voice announcement) to cause the dynamic obstacle to give way. In addition, the control unit 201 may stop the mobile body 100 in a case where the distance between the dynamic obstacle around the mobile body 100 and the mobile body 100 is within another threshold (for example, 1 m).

Thereafter, the processing returns to S301, and the above-described processing is repeated.

### <Alignment with Map>

In order to perform the movement control according to the graph, the information acquisition unit 221 can associate the position of the mobile body 100 and the position of the user with the graph. For example, in a case where the graph follows the world coordinate system, the information acquisition unit 221 can use a position of the mobile body 100 and a position of the user according to the world coordinate system. The information acquisition unit 221 may acquire a position of the user in the coordinate system based on the mobile body 100 as the reference. In this case, the information acquisition unit 221 can convert the position of the user in the coordinate system based on the mobile body 100 as the reference into the position of the user in accordance with the world coordinate system based on a position and a posture of the mobile body 100 according to the world coordinate system. Conversely, the information acquisition unit 221 may convert the graph into the coordinate system based on the mobile body 100 as the reference. The posture of the mobile body 100 according to the world coordinate system can be determined based on an acceleration sensor or an imaging result of an indicator, or the like.

Geographical positions of targets such as the user can be determined as follows. For example, the information acquisition unit 221 may acquire observation data obtained by the detection unit 206. The detection unit 206 observes a target included in the surrounding environment of the mobile body 100. The observation data may include an image captured by the imaging device (camera) that is an example of the detection unit 206. Alternatively or additionally, the observation data may include data observed by the LiDAR that is an example of the detection unit 206. The data observed by the LiDAR may include a direction of the target and a distance to the target. In addition, the information acquisition unit 221 decides a geographical position of the target using the observation data. The geographical position may be expressed by two-dimensional coordinate values in a horizontal plane.

For example, the information acquisition unit 221 may decide the geographical position by performing a homography transformation on an image captured by the imaging device (camera). Alternatively or additionally, the information acquisition unit 221 may decide the geographical position based on the data observed by the LiDAR (that is, the direction of the target and the distance to the target).

In addition, the information acquisition unit 221 may determine a position and a posture of the mobile body 100 and a position of the target using the simultaneous localization and mapping (SLAM) technology. For example, the information acquisition unit 221 detects a feature point from an image captured by the detection unit 206. In addition, the information acquisition unit 221 performs matching between the feature point detected from a captured image at time t and the feature point detected from a captured image at time t-Δt. Then, the information acquisition unit 221 estimates a moving amount and a moving direction of the mobile body 100 between the times t and t-Δt based on the matching result. In addition, the information acquisition unit 221 can estimate the position and the posture of the mobile body 100 based on the moving amount and the moving direction of the mobile body 100 estimated in this manner. Further, the information acquisition unit 221 can determine the position of the target based on the position and the posture of the mobile body 100 and the detection result of the feature point.

With the above-described method, the information acquisition unit 221 can estimate the position of the mobile body 100 based on the output from the detection unit included in the mobile body 100. In addition, the information acquisition unit 221 can generate an environment map indicating positions of targets such as the user and an obstacle. Such an environment map may be a map in the coordinate system based on the mobile body 100 as the reference.

Here, the decision unit 226 can decide the movement target position of the mobile body 100 based on the graph converted into the coordinate system based on the mobile body 100 as the reference and aligned with the environment map. That is, the decision unit 226 can decide the movement target position of the mobile body 100 in the coordinate system based on the mobile body 100 as the reference. For example, the information acquisition unit 221 can convert the graph into the coordinate system based on the mobile body 100 as the reference and align the converted graph with the environment map. With such a configuration, the movement control of the mobile body 100 can be performed in accordance with the position of the user or the obstacle indicated in the environment map.

Meanwhile, when a result of estimating the position of the mobile body 100 by the information acquisition unit 221 changes, a conversion parameter from the world coordinate system to the coordinate system based on the mobile body 100 as the reference changes. In this case, a conversion result of the graph into the coordinate system based on the mobile body 100 as the reference also changes. In the embodiment, the information acquisition unit 221 can transform the graph and align the transformed graph with the map so as to alleviate the change in the conversion result of the graph caused by the change in the coordinate system based on the mobile body as the reference. For example, the information acquisition unit 221 can apply a filter that reduces the change in the conversion result of the graph when the coordinate conversion is performed on the graph. According to such a configuration, it is possible to suppress a rapid change in the movement target position of the mobile body 100 due to the change in the result of estimating the position of the mobile body 100.

### <Update of Graph>

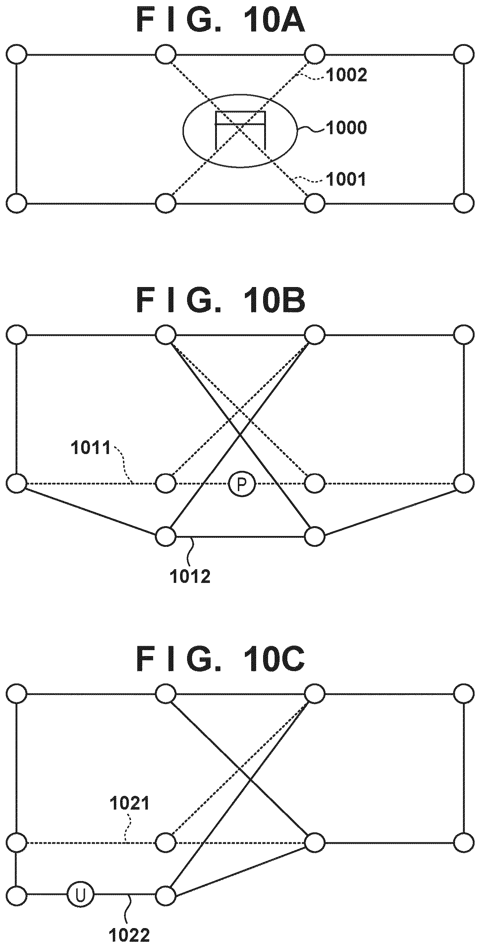

The update unit 228 can update the graph based on a detection result of an obstacle. For example, the update unit 228 may update the graph to delete an edge based on a determination that the obstacle is present on the edge. For example, FIG. 10A illustrates a state in which information acquisition unit 221 detects an obstacle region 1000. An edge 1001 and an edge 1002 pass through the obstacle region 1000. At this time, the update unit 228 can update the graph so as to delete the edge 1001 and the edge 1002 passing through the obstacle region 1000. The update unit 228 may delete an edge based on a determination that a static obstacle is present on an edge. The static obstacles may include semi-static obstacles, such as a desk and a chair, that do not move autonomously but can be moved by an external force. Note that the presence of an obstacle on an edge means that the obstacle is present on a route in the real space corresponding to the edge.

In addition, the update unit 228 may update the graph to offset the edge based on the determination that the obstacle is present on the edge. At this time, the update unit 228 can translate the edge so as not to pass through the obstacle. In addition, the update unit 228 may move another edge, connected to the edge before the offset via a node, so as to be connected to the offset edge. For example, FIG. 10B illustrates a state in which a dynamic obstacle, which is a person (P), is present on an edge 1011. At this time, the update unit 228 can offset the edge 1011 to an edge 1012. In FIG. 10B, nodes at both ends of the edge 1011 have also been moved, and another edge connected to the edge 1011 has also been moved so as to be connected to these nodes. The update unit 228 may delete an edge based on the determination that the dynamic obstacle is present on the edge. As illustrated in FIG. 10C, an edge 1021 may be offset to an edge 1022 in accordance with the position of the user (U).

Note that the update unit 228 may update the graph so as to correct or delete an edge by a method according to a size of an obstacle present on the edge based on a determination that the obstacle is present on the edge. For example, in a case where a ratio of a length of a portion of the edge passing through a region of the obstacle to a length of the edge is larger than a threshold, the update unit 228 can delete the edge. In addition, for example, in a case where the ratio of the length of the portion of the edge passing through the region of the obstacle to the length of the edge is equal to or smaller than the threshold, the update unit 228 can offset this edge.

### <Position Control at Destination>

The controller 227 may change a movement control method of the mobile body 100 in accordance with whether the user is located near a destination. In the embodiment, a node corresponding to a destination of a person is set in advance. Data of the graph may include information indicating whether each node corresponds to the destination of the person. Then, the controller 227 can change a relative position or an orientation of the mobile body with respect to the person at the movement target position in accordance with whether the user is located within a predetermined range from the node corresponding to the destination.

FIG. 9A illustrates an example in which a node 900 does not correspond to a destination of a person. In this example, the mobile body 100 (R) reaches the movement target position (T) in the state of facing the opposite side of the user (U) so as to move ahead of the user (U). FIG. 9B illustrates an example in which the node 900 corresponds to the destination of the person. In this example, the mobile body 100 (R) reaches the movement target position (T) in the state of facing the user (U). In such a configuration, the user can easily operate the mobile body 100 at the destination. As described above, a load can be stored in a front surface of the mobile body 100. According to such a configuration, it becomes easy for the user to access the front surface of the mobile body 100 to store the load.

The controller 227 may further change the relative position or the orientation of the mobile body with respect to the person at the movement target position in accordance with the moving speed of the user. For example, in a case where the user is located within the predetermined range from the node corresponding to the destination and the moving speed of the user is less than a threshold, the controller 227 can estimate that the user is about to stop at this node. In this case, the controller 227 can control the movement of the mobile body 100 such that the mobile body 100 (R) reaches the movement target position (T) in the state of facing the user (U).

### <Other Embodiments>

Different graphs may be used in accordance with environments. For example, a movement route of a person can be changed in accordance with time zones or the weather. Therefore, different graphs may be used in accordance with the time zones or the weather.

### <Summary of Embodiments>

### [Item 1]

A system (201) configured to control a mobile body (100) to move in accordance with movement of a person, the system comprising:
an information acquisition means (221) for acquiring information indicating a position and a moving direction of a person;
a graph acquisition means (222) for acquiring a graph that includes nodes and edges and indicates a movement route of the person;
a determination means (223) for determining a first edge of the graph corresponding to the position (U) of the person based on the position of the person; and
a decision means (226) for deciding a movement target position (T) of the mobile body (100) based on the first edge or on one or more edges located in the moving direction of the person with respect to the first edge.

This system can stably control a movement of the mobile body that moves based on a movement of an object to be tracked.

### [Item 2]

The system according to item 1, wherein the decision means (226) is further for deciding the movement target position (T) of the mobile body (100) based on a position corresponding to a point on the first edge or the one or more edges located in the moving direction of the person with respect to the first edge.

This system can control a movement of the mobile body in an improved manner.

### [Item 3]

The system according to item 1 or 2, wherein the decision means (226) is further for deciding the movement target position (T) of the mobile body (100) based on a plurality of edges (701, 702) connected to the first edge at a first node (710) located in the moving direction of the person among nodes to which the first edge is connected.

This system can control a movement of the mobile body in an improved manner.

### [Item 4]

The system according to item 3, wherein the decision means (226) is further for evaluating probabilities that the person passes through routes corresponding to each of the plurality of edges (701, 702) connected to the first edge, and deciding, as the movement target position (T) of the mobile body (100), a position on a route obtained by weighting and combining the routes corresponding to each of the plurality of edges (701, 702) in accordance with the probabilities.

This system can control a movement of the mobile body in an improved manner.

### [Item 5]

The system according to any one of items 1-4, wherein the decision means (226) is further for deciding the movement target position in such a way that the mobile body (100) leads or follows the person.

This system can enable to lead or follow the person in an improved manner.

### [Item 6]

The system according to any one of items 1-5, further comprising an update means (228) for updating the graph to delete an edge (1001, 1002) based on a determination that an obstacle is present on the edge.

This system can stably control the movement of the mobile body even if there is an obstacle.

### [Item 7]

The system according to any one of items 1-6, further comprising an update means (228) for updating the graph to offset an edge (1011) based on a determination that an obstacle is present on the edge.

This system can stably control the movement of the mobile body even if there is an obstacle.

### [Item 8]

The system according to any one of items 1-7, further comprising an update means (228) for updating the graph to correct or delete an edge in a manner dependent on a size of an obstacle present on the edge based on a determination that the obstacle is present on the edge.

This system can stably control the movement of the mobile body even if there is an obstacle.

### [Item 9]

The system according to item 8, wherein the update means (228) is further for updating the graph to delete the edge when a ratio of a length of a portion of the edge passing through a region of the obstacle to a length of the edge is larger than a threshold.

This system can appropriately control the movement of the mobile body in view of the size of the obstacle.

### [Item 10]

The system according to item 9, wherein the update means (228) is further for updating the graph to offset the edge when the ratio of the length of the portion of the edge passing through the region of the obstacle to the length of the edge is equal to or smaller than the threshold.

This system can appropriately control the movement of the mobile body in view of the size of the obstacle.

### [Item 11]

The system according to any one of items 1-8, wherein
the information acquisition means (221) is further for estimating a position of the mobile body (100) based on an output from a sensor included in the mobile body (100), and generating an environment map in a coordinate system based on the mobile body (100) as a reference, and
the decision means (226) is further for deciding the movement target position (T) of the mobile body (100) based on the graph converted into the coordinate system based on the mobile body (100) as the reference and aligned with the environment map.

This system can stably control the movement of the mobile body in view of the surrounding environment.

### [Item 12]

The system according to item 11, wherein the information acquisition means (221) is further for transforming the graph and aligning the graph with the environment map to alleviate a change in a conversion result of the graph caused by a change in the coordinate system based on the mobile body (100) as the reference.

This system can stably control the movement of the mobile body in view of the surrounding environment.

### [Item 13]

A mobile body (100) comprising:
the system (201) according to any one of items 1-12;
a sensor (206);
a control means (227) for controlling a movement of the mobile body (100) to move toward the movement target position (T); and
a drive means (204) for moving the mobile body (100) in accordance with the control by the control means (227),
wherein the information acquisition means (221) included in the system (201) is further for estimating the position of the person based on an output from the sensor (206).

This mobile body can stably move in accordance with the movement of the object to be tracked.

### [Item 14]

The mobile body (100) according to item 13, wherein the control means (227) is further for controlling the mobile body (100) in such a way that the mobile body (100) moves on a route indicated by the edge in response to a determination that an obstacle is present between a current position of the mobile body (100) and the movement target position (T).

This mobile body can stably move even if there is an obstacle.

### [Item 15]

The mobile body (100) according to item 13 or 14, wherein the control means (227) is further for controlling the mobile body (100) in such a manner that the mobile body (100) moves straight from the current position of the mobile body (100) to the movement target position (T) in response to a determination that no obstacle is present between the current position of the mobile body (100) and the movement target position (T).

This mobile body can stably move in accordance with the movement of the object to be tracked.

### [Item 16]

The mobile body (100) according to any one of items 13-15, wherein
a node (900) corresponding to a destination of the person is set in advance, and
the control means (227) is further for changing a relative position or an orientation of the mobile body (100) with respect to the person at the movement target position (T) in accordance with whether the person is located within a predetermined range from the node (900) corresponding to the destination.

This mobile body can be easily operated by a user at the destination.

### [Item 17]

A method of controlling a mobile body (100) to move in accordance with movement of a person, performed by an information processing apparatus (201), the method comprising:
acquiring (S301) information indicating a position and a moving direction of a person;
acquiring (S302) a graph that includes nodes and edges and indicates a movement route of the person;
determining (S303) a first edge of the graph corresponding to the position of the person based on the position of the person; and
deciding (S305) a movement target position of the mobile body based on the first edge or on one or more edges located in the moving direction of the person with respect to the first edge.

This method can stably control a movement of the mobile body that moves based on a movement of an object to be tracked.

### [Item 18]

A computer program which causes a computer to function as any one of items 1-12.

This program can stably control a movement of the mobile body that moves based on a movement of an object to be tracked.

The invention is not limited to the foregoing embodiments, and various variations/changes are possible within the spirit of the invention.

## Claims

1. A system (201) configured to control a mobile body (100) to move in accordance with movement of a person, the system comprising:
an information acquisition means (221) for acquiring information indicating a position and a moving direction of a person;
a graph acquisition means (222) for acquiring a graph that includes nodes and edges and indicates a movement route of the person;
a determination means (223) for determining a first edge of the graph corresponding to the position (U) of the person based on the position of the person; and
a decision means (226) for deciding a movement target position (T) of the mobile body (100) based on the first edge or on one or more edges located in the moving direction of the person with respect to the first edge.

2. The system according to claim 1, wherein the decision means (226) is further for deciding the movement target position (T) of the mobile body (100) based on a position corresponding to a point on the first edge or the one or more edges located in the moving direction of the person with respect to the first edge.

3. The system according to claim 1 or 2, wherein the decision means (226) is further for deciding the movement target position (T) of the mobile body (100) based on a plurality of edges (701, 702) connected to the first edge at a first node (710) located in the moving direction of the person among nodes to which the first edge is connected.

4. The system according to claim 3, wherein the decision means (226) is further for evaluating probabilities that the person passes through routes corresponding to each of the plurality of edges (701, 702) connected to the first edge, and deciding, as the movement target position (T) of the mobile body (100), a position on a route obtained by weighting and combining the routes corresponding to each of the plurality of edges (701, 702) in accordance with the probabilities.

5. The system according to any one of claims 1-4, wherein the decision means (226) is further for deciding the movement target position in such a way that the mobile body (100) leads or follows the person.

6. The system according to any one of claims 1-5, further comprising an update means (228) for updating the graph to delete an edge (1001, 1002) based on a determination that an obstacle is present on the edge.

7. The system according to any one of claims 1-6, further comprising an update means (228) for updating the graph to offset an edge (1011) based on a determination that an obstacle is present on the edge.

8. The system according to any one of claims 1-7, further comprising an update means (228) for updating the graph to correct or delete an edge in a manner dependent on a size of an obstacle present on the edge based on a determination that the obstacle is present on the edge.

9. The system according to claim 8, wherein the update means (228) is further for updating the graph to delete the edge when a ratio of a length of a portion of the edge passing through a region of the obstacle to a length of the edge is larger than a threshold.

10. The system according to claim 9, wherein the update means (228) is further for updating the graph to offset the edge when the ratio of the length of the portion of the edge passing through the region of the obstacle to the length of the edge is equal to or smaller than the threshold.

11. The system according to any one of claims 1-8, wherein
the information acquisition means (221) is further for estimating a position of the mobile body (100) based on an output from a sensor included in the mobile body (100), and generating an environment map in a coordinate system based on the mobile body (100) as a reference, and
the decision means (226) is further for deciding the movement target position (T) of the mobile body (100) based on the graph converted into the coordinate system based on the mobile body (100) as the reference and aligned with the environment map.

12. The system according to claim 11, wherein the information acquisition means (221) is further for transforming the graph and aligning the graph with the environment map to alleviate a change in a conversion result of the graph caused by a change in the coordinate system based on the mobile body (100) as the reference.

13. A mobile body (100) comprising:
the system (201) according to any one of claims 1-12;
a sensor (206);
a control means (227) for controlling a movement of the mobile body (100) to move toward the movement target position (T); and
a drive means (204) for moving the mobile body (100) in accordance with the control by the control means (227),
wherein the information acquisition means (221) included in the system (201) is further for estimating the position of the person based on an output from the sensor (206).

14. The mobile body (100) according to claim 13, wherein the control means (227) is further for controlling the mobile body (100) in such a way that the mobile body (100) moves on a route indicated by the edge in response to a determination that an obstacle is present between a current position of the mobile body (100) and the movement target position (T).

15. The mobile body (100) according to claim 13 or 14, wherein the control means (227) is further for controlling the mobile body (100) in such a manner that the mobile body (100) moves straight from the current position of the mobile body (100) to the movement target position (T) in response to a determination that no obstacle is present between the current position of the mobile body (100) and the movement target position (T).

16. The mobile body (100) according to any one of claims 13-15, wherein
a node (900) corresponding to a destination of the person is set in advance, and
the control means (227) is further for changing a relative position or an orientation of the mobile body (100) with respect to the person at the movement target position (T) in accordance with whether the person is located within a predetermined range from the node (900) corresponding to the destination.

17. A method of controlling a mobile body (100) to move in accordance with movement of a person, the method comprising:
acquiring (S301) information indicating a position and a moving direction of a person;
acquiring (S302) a graph that includes nodes and edges and indicates a movement route of the person;
determining (S303) a first edge of the graph corresponding to the position of the person based on the position of the person; and
deciding (S305) a movement target position of the mobile body based on the first edge or on one or more edges located in the moving direction of the person with respect to the first edge.

18. A computer program comprising instructions which, when the program is executed by a computer, cause the computer to carry out the method of claim 17.
